# EUROPÄISCHE PATENTSCHRIFT

(11) **EP 1 008 201 B1**
(45) Veröffentlichungstag und Bekanntmachung des Hinweises auf die Patenterteilung: **05.12.2001**
(21) Anmeldenummer: 98941317.4
(22) Anmeldetag: 10.07.1998
(51) Int. Cl.: H01M 8/04, B60L 11/18, H01M 8/24

(54) **VERFAHREN UND VORRICHTUNG ZUM BEFÜLLEN EINES BRENNSTOFFZELLENSTACKS**
METHOD AND DEVICE FOR FILLING A FUEL CELL STACK
PROCEDE ET DISPOSITIF POUR LE REMPLISSAGE D'UN EMPILEMENT DE PILES A COMBUSTIBLE

(30) Priorität: 26.07.1997 DE 19732305
(43) Veröffentlichungstag der Anmeldung: 14.06.2000
(73) Patentinhaber: Volkswagen Aktiengesellschaft, 38436 Wolfsburg (DE)
(72) Erfinder: HAUER, Karl-Heinz, D-38102 Braunschweig (DE)
(86) Internationale Anmeldenummer: EP9804313
(87) Internationale Veröffentlichungsnummer: WO9905739

(56) Entgegenhaltungen:
- EP-A- 0 052 265
- US-A- 3 496 022
- US-A- 4 243 731
- PATENT ABSTRACTS OF JAPAN vol. 017, no. 071 (E-1319), 12. Februar 1993 -& JP 04 274171 A (AISIN AW CO LTD), 30. September 1992
- PATENT ABSTRACTS OF JAPAN vol. 096, no. 001, 31. Januar 1996 & JP 07 249419 A (HITACHI LTD), 26. September 1995 -& DATABASE WPI Derwent Publications Ltd., London, GB; AN 95-377015 XP002087179 A
- PATENT ABSTRACTS OF JAPAN vol. 010, no. 179 (E-414), 24. Juni 1986 -& JP 61 027071 A (MITSUBISHI ELECTRIC CORP), 6. Februar 1986
- PATENT ABSTRACTS OF JAPAN vol. 097, no. 007, 31. Juli 1997 & JP 09 082348 A (YOYU TANSANENGATA NENRYO DENCHI HATSUDEN SYST GIJUTSU KENKYU KUMIAI), 28. März 1997
- PATENT ABSTRACTS OF JAPAN vol. 013, no. 218 (E-761), 22. Mai 1989 -& JP 01 030174 A (HITACHI LTD), 1. Februar 1989
- PATENT ABSTRACTS OF JAPAN vol. 014, no. 089 (E-0891), 19. Februar 1990 -& JP 01 298653 A (TOSHIBA CORP), 1. Dezember 1989
- PATENT ABSTRACTS OF JAPAN vol. 017, no. 071 (E-1319), 12. Februar 1993 -& JP 04 274174 A (AISIN AW CO LTD), 30. September 1992

## Beschreibung

Die Erfindung betrifft ein Verfahren und eine Vorrichtung zur Befüllung eines Brennstoffzellenstacks, umfassend eine Vielzahl von miteinander in Reihe geschalteten Brennstoffzellen, mindestens eine Gaseintritts- und eine Gasaustrittsöffnung.

Zur Erzielung ausreichend großer Spannungen bzw. Ströme ist es bekannt, eine Vielzahl gleichartiger Brennstoffzellen zu einem BrennstoffzeHenstack zusammenzufassen. Die Brennstoffzellen werden dazu parallel und/oder in Reihe zusammengeschaltet und weisen eine gemeinsame Eintrittsöffnung und Gasaustrittsöffnung auf. Werden die Brennstoffzellenstacks nicht mit reinen Betriebsgasen gespeist, so ergibt sich auf der Anodenseite ein Konzentrationsgefälle des Betriebsgases von der Gaseintrittsöffnung zur Gasaustrittsöffnung. Dies ist beispielsweise beim Betrieb mit einem vorgeschalteten Methanolreformer zur Wasserstofferzeugung der Fall. Das Anodengas besteht in diesem Fall am Gaseintritt aus ca. 55 % H₂, 22 % N₂, 22 % CO₂ und 1 % O₂, wohingegen am Gasaustritt die H₂-Konzentration sich auf bis zu 10 % verringert haben kann. Entsprechend größer sind dann die Volumenteile der anderen Gase. Für einen Betrieb mit hohem Wirkungsgrad, d.h. möglichst viel Wasserstoff soll in den Brennstoffzellen umgewandelt werden, wird das Betriebsgas durch zwei oder mehrere in Reihe geschaltete Brennstoffeellenstacks alle zur Verfügung stehenden Brennstoffzellen durchgeleitet, so daß idealerweise die Konzentration am Gasaustritt null ist. Dabei nimmt die Brennstoffzellenleistung mit der Betriebsgaskonzentration an der Anode ab, d.h. die Brennstoffzellen vor dem Gasaustritt haben eine geringere Ausgangsleistung als die ersten Brennstoffzelien direkt hinter dem Gaseintritt.

Für einen Betrieb mit hoher Leistung werden sämtliche Zellen und Stacks parallel mit Gas versorgt. Der Anteil Wasserstoff im Abgas ist höher als in der zuerst beschriebenen Reihenschaltung der Brennstoffzellenstacks.

Beim Einsatz von Brennstoffzellen in Kraftfahrzeugen ist es zum einen wünschenswert, daß für Beschleunigungsvorgänge oder Fahrten mit hoher Geschwindigkeit möglichst viel Leistung zur Verfügung steht, wobei der Wirkungsgrad der Energieumwandlung in diesem Fall zweitrangig ist. Andererseits ist es im Teillastbetrieb z. B. bei Fahrten mit konstanter Geschwindkeit oder Stadtfahrten mit geringen Beschleunigungsvorgängen wünschenswert, einen möglichst hohen Wirkungsgrad der Energiewandlung zu erreichen, um die Reichweite mit einer Tankfüliung zu erhöhen, bzw. die Betriebskosten zu senken.

Der Erfindung liegt daher das technische Problem zugrunde, ein Verfahren und eine Vorrichtung zur Befüllung von Brennstoffzellenstacks zu schaffen, die beide Anforderungen befriedigend erfüllt.

Die Lösung des technischen Problems ergibt sich durch die Merkmale der Patentansprüche 1 und 3. Durch die Zuordnung einer Gaseintrittsöffnung mit verschließbarer Gasklappe zu jeder oder gruppenweise zusammengefaßten Brennstoffzellen, wobei die Gasklappe mit einem Stellsignal betätigbar ist, kann zwischen der Betriebsweise mit hohem Wirkungsgrad und der mit hoher Leistung umgeschaltet werden. Dazu wird das Brennstoffzellenstack überwiegend bei hohem Wirkungsgrad betrieben und nur bei hoher Leistungsanforderung, wie z.B. bei Beschleunigungsvorgängen, werden die Gasklappen geöffnet und die Brennstoffzellen bzw. Gruppen von Brennstoffzellen parallel betrieben. Weitere vorteilhafte Ausgestaltungen der Erfindung ergeben sich aus den Unteransprüchen.

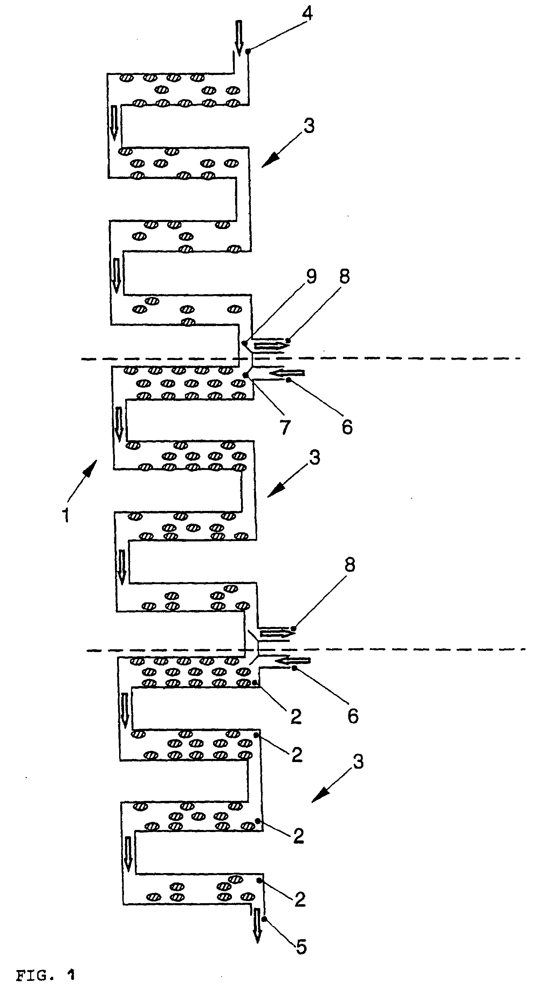

Die Erfindung wird nachfolgend anhand eines bevorzugten Ausführungsbeispiels näher erläutert. Die einzige Figur zeigt eine schematische Seitenansicht eines Brennstoffzellenstacks.

Das Brennstoffzellenstack 1 umfaßt zwölf Brennstoffzellen 2, die in drei Gruppen 3 mit je vier Brennstoffzellen 2 zusammengefaßt sind. Die Brennstoffzellen 2 sind zueinander in Reihe geschaltet. Die erste Brennstoffzelle 2 weist eine Gaseintrittsöffnung 4 und die letzte Brennstoffzelle 2 weist eine Gasaustrittsöffnung 5 auf. Jeder Gruppe 3 ist eine weitere Gaseintrittsöffnung 6 mit einer verschließbaren Gasklappe 7 und eine Gasaustrittsöffnung 8 mit Gasklappe 9 zugeordnet, wobei die erste Gruppe 3 die Gaseintrittsöffnung 4 und die letzte Gruppe 3 die Gasaustrittsöffnung 5 verwenden. Vorzugsweise werden alle Gasklappen 8, 9 durch ein gemeinsames Stellsignal betätigt.

Wird eine Betriebsweise mit hohem Wirkungsgrad gewünscht, so werden die Gasklappen 8, 9 derart angesteuert, daß diese die zugehörigen Gaseintrittsöffnungen 6 und Gasaustrittsöffnungen 8 verschließen. Das im Brennstoffzellenstack 1 umzusetzende Anodengas wird in die Gaseintrittsöffnung 4 eingeleitet und durchströmt sukzessive alle Brennstoffzellen 2. Das Anodengas tritt dann durch die Gasaustrittsöffnung 5 aus dem Brennstoffeellenstack aus.

Wird eine Betriebsweise mit hoher Leistung gewünscht, so werden die Gasklappen 8, 9 geöffnet und der Anodengasstrom entsprechend umgeleitet, so daß die Gruppen 3 jeweils parallel mit Anodengas befüllt werden. Ist der Druckabfall im Brennstoffzellenstack groß genug, um ausreichend frisches Anodengas über die Gaseintrittsöffnungen 4, 6 den Brennstoffzellen 2 zuzuführen, so kann auf die zusätzlichen Gasaustrittsöffnungen 8 verzichtet werden. Das Stellsignal für die Gasklappen 8, 9 wird vorzugsweise von einem Motorsteuergerät und/oder einem Batteriemanager erzeugt, von denen die abgeforderte Leistung leicht erfaßbar ist. Die Kathodenseite bleibt von der Umschaltung unbeeinflußt, wenn das Kathodengas normale Umgebungsluft ist. In anderen Fällen, z.B. beim Betrieb mit reinem Sauerstoff, kann für die Kathode eine der Anode entsprechende Umschaltung der Gasströme vorgesehen werden. Die elektronische Verschaltung des Brennstoffzellenstacks 1 bleibt von allen Maßnahmen unberührt.

Ein bevorzugtes Anwendungsgebiet der Erfindung ist der Einsatz in Kraftfahrzeugen, insbesondere mit vorgeschaltetem Methanolreformer.

## Patentansprüche

1. Brennstoffzellenstack, umfassend eine Vielzahl von miteinander in Reihe geschalteter Brennstoffzellen, mindestens eine Gaseintritts- und einer Gasaustrittsöffnung,
**dadurch gekennzeichnet, daß,**
jeder oder gruppenweise den Brennstoffzellen (2) eine Gaseintrittsöffnung (6) mit schließbarer Gasklappe (7) zugeordnet ist, wobei die Gasklappe (7) mittels eines Stellsignais betätigbar ist.

2. Brennstoffzellenstack nach Anspruch 1, **dadurch gekennzeichnet, daß**, jeder oder gruppenweise, den Brennstoffzellen (2) eine Gasaustrittsöffnung (8) mit verschließbarer Gasklappe (9) zugeordnet ist, wobei die Gasklappe (9) mittels eines Stellsignals betätigbar ist.

3. Verfahren zur Befüllung von Brennstoffzellenstacks (1), umfassend eine Vielzahl von in Reihe geschalteten Brennstoffzellen (2), mit einer Gaseintritts- und einer Gasaustrittsöffnung (4,5), mittels jeder oder gruppenweise den Brennstoffzellen (2) zugeordneten weiteren Gaseintrittsöffnungen (6) mit Gasklappen (7), umfassend folgende Verfahrensschritte:
a) Erzeugung eines Stellsignals in Abhängigkeit von der abgeforderten Leistung und
b) öffnen bzw. schließen der Gasklappen (7) mittels des Steuersignals, falls die abgeforderte Leistung einen Schwellwert überschreitet bzw. unterschreitet.

4. Verfahren nach Anspruch 3, **dadurch gekennzeichnet, daß** den Brennstoffzellen (2) einzeln oder gruppenweise Gasaustrittsöffnungen (8) mit Gasklappe (9) zugeordnet sind, die mittels des Stetlsignals der Gasktappen (7) für die Gaseintrittsöffnung (6) geschaltet werden.

5. Verfahren nach Anspruch 3, **dadurch gekennzeichnet, daß** den einzelnen Brennstoffzellen (2) oder gruppenweise Gasaustrittsöffnungen (8) mit Gasklappe (9) zugeordnet sind, der Druckabfall über das Brennstoffzellenstack (1) erfaßt und in Abhängigkeit von einem Schwellwert für den Druckabfall ein Stellsignal erzeugt wird, das bei Unterschreitung des Schwellwertes die Gasklappen (9) öffnet.

## Claims

1. Fuel cell stack comprising a plurality of fuels cells which are connected together in series, at least one gas inlet orifice and one gas outlet orifice,
**characterised in that**
each one or groups of the fuel cells (2) are allocated a gas inlet orifice (6) having a gas flap (7) which can be closed, wherein the gas flap (7) can be actuated by means of a control signal.

2. Fuel cell stack according to claim 1, **characterised in that** each one or groups of the fuel cells (2) are allocated a gas outlet orifice (8) having a gas flap (9) which can be closed, wherein the gas flap (9) can be actuated by means of a control signal.

3. Method of filling fuel cell stacks (1), comprising a plurality of fuel cells (2) which are connected in series, having a gas inlet and gas outlet orifice (4, 5), by means of further gas inlet orifices (6) which are allocated to each one or groups of fuel cells (2) and comprise gas flaps (7), comprising the following method steps:
a) generating a control signal in dependence upon the required output and
b) opening or closing the gas flaps (7) by means of the control signal, if the required output exceeds or is less than a threshold value.

4. Method according to claim 3, **characterised in that** gas outlet orifices (8) having a gas flap (9) are allocated to individual or groups of fuel cells (2) and are switched by means of the control signal of the gas flaps (7) for the gas inlet orifice (6).

5. Method according to claim 3, **characterised in that** gas outlet orifices (8) having a gas flap (9) are allocated to individual or groups of fuel cells (2), the decrease in pressure over the fuel cell stack (1) is detected and in dependence upon a threshold value for the decrease in pressure a control signal is generated which opens the gas flaps (9) when the value achieved is less than the threshold value.

## Revendications

1. Empilement de piles à combustible, comprenant une pluralité de piles à combustible branchées ensemble en série et au moins un orifice d'entrée de gaz et un orifice de sortie de gaz,
**caractérisé en ce qu'**un orifice d'entrée de gaz (6) avec clapet de gaz (7) pouvant être fermé est associé à chacune des piles à combustible ou à des groupes de piles à combustible (2), le clapet de gaz (7) pouvant être actionné au moyen d'un signal de commande.

2. Empilement de piles à combustible selon la revendication 1, **caractérisé en ce qu'**un orifice de sortie de gaz (8) avec clapet de gaz (9) pouvant être fermé est associé à chacune des piles à combustible (2) ou à des groupes de piles à combustible, le clapet de gaz (9) pouvant être actionné au moyen d'un signal de commande.

3. Procédé pour le remplissage d'empilements de piles à combustible (1), comprenant une pluralité de piles à combustible (2) branchées en série et un orifice d'entrée de gaz (4) et un orifice de sortie de gaz (5), au moyen d'autres orifices d'entrée de gaz (6) avec clapets de gaz (7) associés à chacune des piles à combustible (2) ou à des groupes de piles à combustible, comprenant les étapes suivantes :
a) production d'un signal de commande en fonction de la puissance demandée et
b) ouverture ou fermeture des clapets de gaz (7) au moyen du signal de commande si la puissance demandée devient supérieure ou inférieure à une valeur de seuil.

4. Procédé selon la revendication 3, **caractérisé en ce que** des orifices de sortie de gaz (8) avec clapets de gaz (9) sont associés individuellement ou par groupe aux piles à combustible (2) et sont commandés au moyen du signal de commande des clapets de gaz (7) pour l'orifice d'entrée de gaz (6).

5. Procédé selon la revendication 3, **caractérisé en ce qu'**on associe des orifices de sortie de gaz (8) avec clapets de gaz (9) aux piles à combustible (2) individuellement ou par groupes, **en ce qu'**on détecte la chute de pression dans l'empilement de piles à combustible (1) et **en ce qu'**on produit en fonction d'une valeur de seuil pour la chute de pression un signal de commande qui ouvre les clapets de gaz (9) lorsque cette chute de pression est inférieure à la valeur de seuil.
